# EUROPEAN PATENT SPECIFICATION

(11) **EP 0 490 875 B1**
(45) Date of publication and mention of the grant of the patent: **19.11.1997**
(21) Application number: 92102445.1
(22) Date of filing: 12.12.1987
(51) Int. Cl.: G06F 15/02

(54) **Electronic calculator**
Elektronischer Rechner
Calculateur électronique

(30) Priority: 15.12.1986 JP 298178/86; 23.12.1986 JP 315500/86; 23.12.1986 JP 315501/86
(43) Date of publication of application: 17.06.1992
(62) Divisional of application: 87118441.2
(73) Proprietor: SHARP KABUSHIKI KAISHA, Osaka (JP)
(72) Inventor: Matsuda, Eichika, Yamatotakada-shi, Nara-ken (JP); Kado, Makoto, Yamatokoriyama-shi, Nara-ken (JP)
(74) Representative: Selting, Günther, Dipl.-Ing.

(56) References cited:
- US-A- 4 064 398
- US-A- 4 488 250
- US-A- 4 545 022

## Description

The present invention relates to an electronic calculator which has a function to change the display between a decimal expression and a fraction expression. More particularly, the present invention relates to a calculator which displays the number in the fraction expression when the decimal part can be represented as ^{x}/2ⁿ (x is an integer; n is an integer), and displays the number in the decimal expression when the decimal part can not be expressed by ^{x}/2ⁿ.

An electronic calculator which is capable of converting between the decimal expression and the fraction expression is already available on the market. However, all such conventional calculators are designed to convert decimal representations to fractional representations, or vice versa, in response to the user's operation, and none of them are designed to automatically convert between decimal expression and fraction expression according to the nature of the numerical values.

From US-A-4 488 250 an electronic calculator is known that comprises a plurality of fraction input keys. With these keys it is possible to select the denominator of the following inputted fractions. After one of the fractional input keys is pressed, the operator inputs the numerator of the fraction. If the inputted numerator is greater than the selected denominator, the calculator automatically displays the appropriate number and the remaining fraction, for example 33/16 is displayed as 2 1/16.

It is the object of the present invention to provide an electronic calculator which is capable of automatically selecting either a fraction or a decimal expression according to the value of the corresponding number. This object is accomplished by an electronic calculator defined by the claim.

The objects and features of the present invention will become clear from the following description taken in conjunction with the preferred embodiments thereof with reference to the accompanying drawings, in which:
Fig. 1 is a top plan view of an electronic calculator according to a preferred embodiment of the present invention;
Fig. 2 is a fragmentary view of a display screen of the calculator of Fig. 1;
Fig. 3 is a block diagram of the electronic calculator shown in Fig. 1;
Fig. 4 is a flowchart for entering a yard unit data;
Fig. 5 is a flowchart for entering a foot unit data;
Fig. 6 is a flowchart for entering an inch unit data;
Fig. 7 is a flowchart for entering a dimension representing a square;
Fig. 8 is a flowchart for entering a dimension representing a cubic volume;
Fig. 9 is a flowchart for entering a slash for use in the indication of a fraction;
Fig. 10 is a flowchart for entering a numeric data;
Fig. 11 is a flowchart for calculating dimensions and for effecting an automatic display of a numeral in a fraction representation;
Fig. 12 is a flowchart showing a detail of an error routine shown in Fig. 11;
Fig. 13 is a flowchart showing a detail of step #19 shown in Fig. 11; and
Fig. 14 is a flowchart showing a detail of step #20 shown in Fig. 11.

Before the description of the present invention proceeds, it is to be noted that like parts are designated by like reference numerals throughout the accompanying drawings.

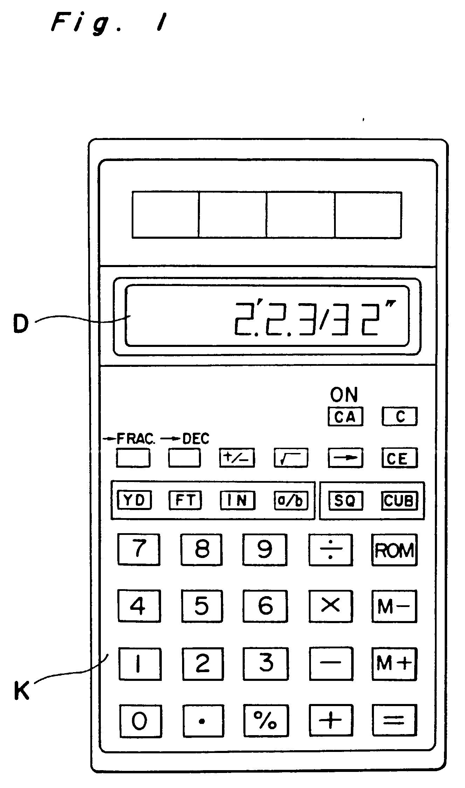

Referring to Fig. 1, there is shown a top plan view of an electronic calculator according to one embodiment of the present invention.

The description herein is given in relation to the application of the present invention to an electronic calculator which performs calculations in yards, feet and inches.

The functions with respect to each key on the keyboard are as follows.

| Key Identification | Function |
|---|---|
| YD | yard input |
| FT | foot input |
| IN | inch input |
| a/b | fraction input |
| SQ | area input |
| CUB | cubic volume input |
| →DEC | converts fractions to decimals |
| →FRAC | converts decimals to fractions |

There are more keys, such as ten numerical keys for inputting numerical values, arithmetic operational keys, and a memory key, which are omitted from the description here because they are used in known manners.

A numerical value accompanied by a unit is inputted in the calculator by the depression of one or more numerical keys to input a number, and then, by the depression of one of the above-mentioned unit keys, to input a unit. A calculation of a value accompanied by a unit is executed by inputting the numerical value accompanied by a unit and depressing one of the operational keys.

According to the electronic calculator of the present invention, there are a plurality of unit data to be entered which are in the same category, such as length, but in different levels, such as yard, foot and inch. Thus, it can be said that the unit yard is higher in level than the unit foot, and the unit foot is higher in level than the unit inch.

The result of the calculation is shown on the display D.

When the result of the calculation represents a length in terms of dimension, that is, when the calculation is "a length ± a length", "a length x a number", a length ö a number", an area ö length", or "a volume ö an area", the electronic calculator according to the present invention will automatically display the result of the calculation under a fraction expression when the inches can be represented by ^{x}/2ⁿ (x is an integer, n is an integer), and in other cases, the calculator will automatically display the result under a decimal expression.

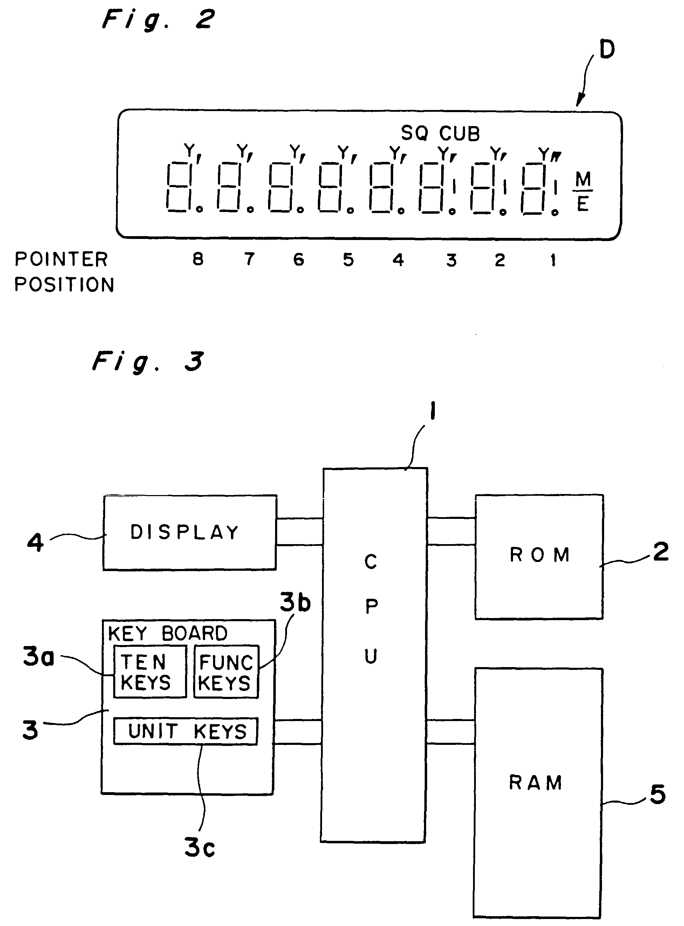

Referring to Fig. 2, there is shown a fragmentary view of the display D.

In the display D, there are provided segment electrodes to show the following symbols on the display.

| Symbol | Signification |
|---|---|
| Y | indicating the unit "yard" |
| ' | indicating the unit "foot" |
| " | indicating the unit "inch" |
| / | indicating the line between the numerator and denominator |
| SQ | used when an area is computed or inputted |
| CUB | used when a volume is computed or inputted |

An example of the display under the expression mode is shown below.$\text{2.' 7" + 9. 1/8" = 3.' 4. 1/8"}$ The result of the calculation 3.' 4. 1/8", reads$\text{3 feet 4} \frac{\text{1}}{\text{8}} \text{inches.}$

An example of the display under the decimal expression mode is shown below.$\text{3.' 2. 1/2" - 1.' 2. 3" = 2.' 0. 2"}$

Referring to Fig. 3, a block diagram of an electronic calculator of the present invention is shown.

In Fig. 3, a CPU (central processing unit) 1 controls a keyboard unit 3 and a display unit 4 in accordance with a program stored in a ROM (read only memory) 2, and also the CPU 1 executes calculations of inputted data from said keyboard unit 3.

The inputted data, such as data used during operation, data obtained as a result of operation, etc. are stored in a RAM (random access memory) 5.

The CPU 1 outputs various data to said display unit 4 for displaying various information, such as inputted number and the result of the calculation, etc., which are stored in RAM 5.

Keyboard unit 3 comprises ten keys 3a for inputting numbers, function keys 3b for inputting information for various arithmetic operations, and unit keys 3c for inputting units such as foot and inch.

When any of these keys 3a, 3b, 3c is depressed, a signal corresponding to the depressed key is transmitted to CPU 1.

The data stored in ROM 2 is used to control keyboard unit 3 and display unit 4 and also to perform various operations. CPU 1 performs various controls and operations as it reads out the records.

RAM 5 stores various kinds of information, and is defined by a first operand register X for storing a number of a first operand, a first operand dimension register Xd for carrying a dimension of the first operand, a second operand register Y for carrying a number of a second operand, a second operand dimension register Yd for carrying a dimension of the second operand, unit position registers YP and FP, an inch flag inF, and other registers and flags required for the internal process.

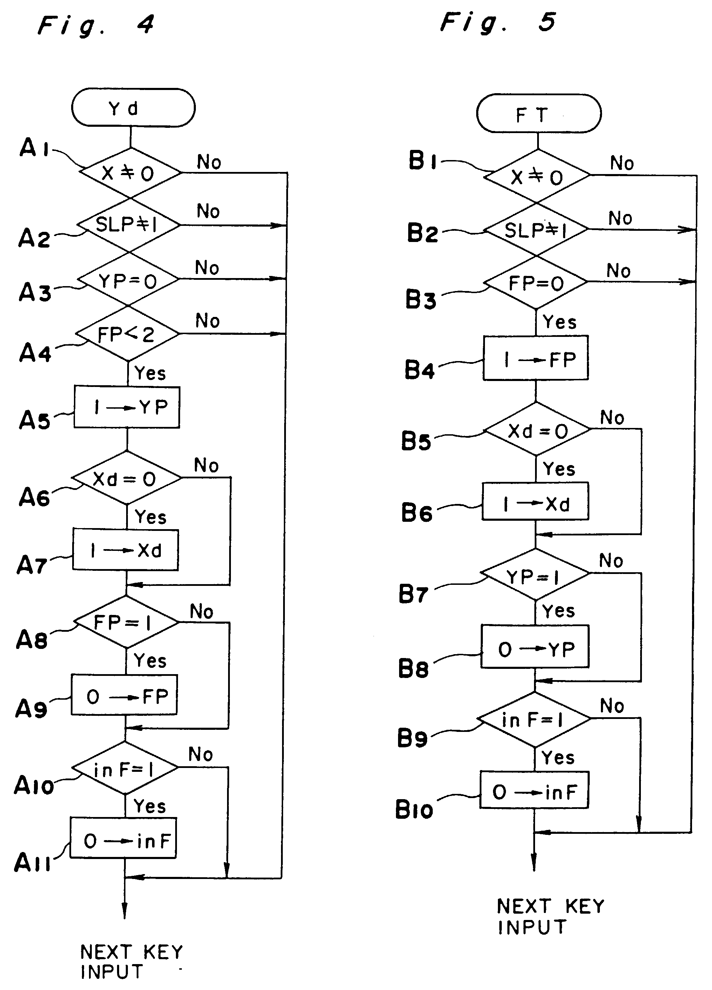

In order to prevent any error depression of the unit keys and/or the dimension keys at the wrong time sequence from being entered, flow charts are provided as will be described below with reference to Figs. 4-10.

### (1) Unit Keys

The units must be entered in the order of a higher unit to a lower unit, that is, yard, foot and inch. Accordingly, the unit "foot", for example, should not be entered before entering the unit "yard", or in another example, after entering the unit "inch", no other units should be entered. Accordingly, the following rules are made.
(a) It is so programmed to inhibit the entering of the unit which is higher than the unit already entered. In other words, the entering of a higher unit is not accepted.
(b) However, it is permitted to reenter the unit which is different from the unit already entered just before, in the case when the user wishes to change the unit just entered.

### (2) Dimension Keys

The area or the volume will not be expressed using two or more different units. In other words, the expression 21.5 yards² is permissible, but the expression 21 yards², 4.5 feet² is not permissible. Furthermore, when the arithmetic calculation is to be carried out, the first and second operands should have the same units. For example, 200 yards² ö 2 yards², or 200 yards² ö 2 yards, are permissible. This is because the units for areas or volumes have a different interchanging relationship from those for lengths, such as 1 yard = 3 feet → 1 yard² = 9 feet². Accordingly, only one unit is permitted to be used in entering an area or a cubic volume. Therefore, the following rule is made.
(c) To enter an area or a volume, the data therefor must be inputted in the order of numerical key, "SQ" or "CUB" key, and unit key.

In other words, after a unit key has been depressed and entered, the depression of the "SQ" or "CUB" key will not be entered.

### (3) Fraction Keys

Since it is meaningless to represent a value in a fraction before entering the lowest unit, the fraction expression is permitted only when the lowest unit is to be entered. Accordingly, the following rule is made.
(d) Once the keys have been depressed to enter a fraction and a unit, the numerals can not be entered anymore.

The flowcharts of Figs. 4 to 10 are based on rules (a) through (d) specified above.

The meanings of the variables used in the flowcharts are defined as follows.
- X:: display register for storing a numerical data which is to be shown on the screen of display unit 4.
- SLP:: display pointer for indicating a slash "/" in a fraction to be shown on the display. No indication will be given when it is carrying "0". (The pointer positions are indicated in Fig. 2.)
- YP:: display pointer for indicating the position of a unit symbol of "yard" to be shown on the display. No indication will be given when it is carrying "0".
- FP:: display pointer for indicating the position of a unit symbol of "foot" to be shown on the display. No indication will be given when it is carrying "0".
- Xd:: data representing the dimension of the numeral stored in display register X. Xd = 0 means "no unit", Xd = 1 means "length", Xd = 2 means "area", and Xd = 3 means "volume".
- inF:: display flag for indicating, when it is carrying "1", a unit symbol of "inch". No indication will be given when it is carrying "0".

It is to be noted that, a number just entered by the depression of one of the following ten keys is displayed at the most right-hand end segment of the display D (Fig. 2), and the number(s) which are already entered shift one place toward the right-hand direction, as in a usual calculator.

Each of the flowcharts shown in Figs. 4-10 will be explained in detail hereinbelow.

### Flowchart of Fig. 4

When the "YD" key is depressed, it is determined whether or not display register X is carrying "0" (step A1), whether or not display pointer SLP is carrying "1" (step A2), whether or not display pointer YP is carrying "0" (step A3), and whether or not display pointer FP is less than 2 (step A4).

When X is carrying "0" at step A1 or when display pointer SLP is carrying "1" at step A2, the program proceeds to the next routine to detect and process the next key input.

Furthermore, when display pointer YP is determined as not carrying "0" at step A3, meaning that the yard input unit has already been inputted, the program also proceeds to the next routine to detect and process the next key input.

When the display pointer FP, indicating the position of the symbol of the unit "foot" on the display, is carrying 2 or a higher number at step A4, it means that at least one number is entered by the depression of one of the ten keys, after the depression of the "FT" key. In such a case, the program proceeds to the next routine to detect and process the next key input without going through step A5, which is provided for entering the unit yard. In this manner, rule (a) is programmed. In other words, when a unit foot is already provided and, thereafter, at least one numeral is entered, it is no longer permitted to enter the unit yard by the depression of the "YD" key.

On the contrary, when the display pointer FP is carrying 1 or 0, the program goes to step A5 to make display pointer YP to carry "1". Thus, the unit yard is entered.

Then, at step A6, it is detected whether or not dimension Xd is 0. If Xd is 0, dimension Xd is made 1 (step A7), so that the entered number will be provided with a symbol showing the dimension of the length.

At step A8, it is detected whether or not display pointer FP is carrying "1", and if display pointer FP is carrying "1", "0" is entered in display pointer FP (step A9). Next, at step A10, it is detected whether or not display flag inF is set. If display flag inF is set, the flag inF is reset, so that the inch unit will not be displayed. Then, the program is ready to detect the next key input.

As apparent from the above description, step A4 is provided for inhibiting the entering of the yard unit data when the yard unit data is inputted immediately after entering a numerical data followed by the foot unit data.

### Flowchart of Fig. 5

When the "FT" key is depressed, it is detected whether or not register X is carrying "0" (step B1), whether or not display pointer SLP is carrying "1" (step B2), and whether or not display pointer FP is carrying "0" (step B3).

When the register X is carrying "0" at step B1, or when display pointer SLP is carrying "1" at step A2, the program proceeds to the next routine to detect and process the next key input.

If display pointer FP is detected as not carrying "0" at step B3, it is so determined that the foot unit has already been inputted. Therefore, the program proceeds to the next routine to detect and process the next key input.

Next, at step B4, display pointer FP is loaded with "1". Then, at step B5, it is detected whether or not dimension Xd is "0". If dimension Xd is 0, dimension Xd is made 1 (step B6).

At step B7, it is detected whether or not display pointer YP is carrying "1". If display pointer YP is carrying "1", "0" is entered in display pointer YP. Next, at step B9, it is detected whether or not display flag inF is set. If flag inF is set, the flag inF is reset so that the inch unit will not be displayed. Then, the program is ready to detect the next key input.

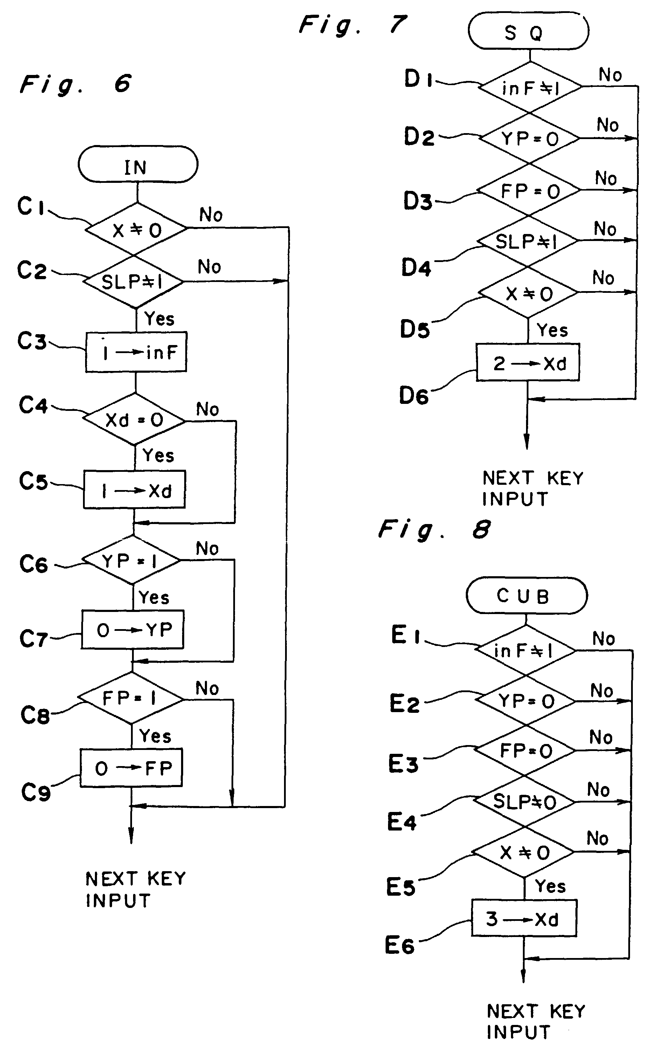

### Flowchart of Fig. 6

When the "IN" key is depressed, it is detected whether or not register X is carrying "0" (step C1) and whether or not display pointer SLP is carrying "1" (step C2).

When the register X is carrying "0" at step C1 or when display pointer SLP is carrying "1" at step C2, the program is ready to detect the next key input.

Next, at step C3, display flag inF is set. Then, at step C4, it is detected whether or not dimension Xd is 0. If dimension Xd is 0, 1 is entered in dimension Xd (step C5.)

At step C6, it is detected whether or not display pointer YP is carrying "1". If display pointer YP is carrying "1", 0 is entered in pointer YP (step C7). Next, at step C8, it is detected whether or not display pointer FP is carrying "1". If display pointer FP is carrying "1", 0 is entered in pointer FP. Then, the program is ready to detect the next key input.

In the program steps of Fig. 4 for entering the "YD" key, the detection of the display flag inF is not provided at the beginning. This is to permit the user to depress a unit key which is different from the one depressed immediately before, as described hereinbefore. In other words, it is so programmed that it is not permitted to enter any numerical keys after the unit "inch" has been entered, as will be explained later. It is sufficient, therefore, for the display unit 4 to show the inch indication only at the lowest pointer position.

### Flowchart of Fig. 7

When the "SA" key is depressed, it is detected whether or not display flag inF is 0 (step D1), whether or not display pointer YP is carrying "0" (step D2), whether or not display pointer FP is carrying "0" (step D3), whether or not display pointer SLP is carrying "1" (step D4), and whether or not display register X is carrying "0" (step D5).

If flag inF is 1 at step D1, or display pointer YP is not 0 at step D2, or display pointer FP is not 0 at step D3, the program is ready to detect the next key input. In this manner, rule (c) is programmed.

Also, when display pointer SLP is 1 or when display register X is 0, the program is ready to detect the next key input.

When the program has moved to step D6, the dimension Xd is made 2 so that the entered number will be provided with a symbol showing the dimension of the area.

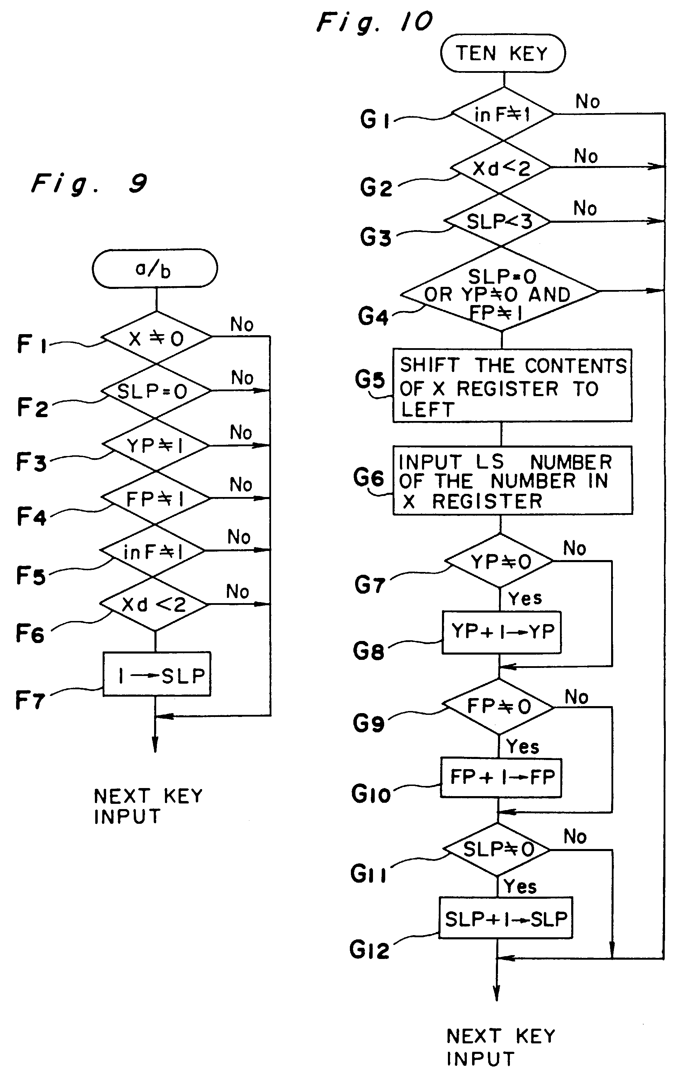

### Flowchart of Fig. 8

When the "CUB" key is depressed, it is detected whether or not display flag inF is 0 (step E1), whether or not display pointer YP is 0 (step E2), whether or not display pointer FP is 0 (step E3), whether or not display pointer SLP is 1 (step E4), and whether or not display register X is 0 (step E5).

If flag inF is 1 at step E1, or display pointer YP is not 0 at step E2, or display pointer FP is not 0 at step E3, the program is ready to detect the next key input. In this manner, rule (c) is programmed.

Also, when display pointer SLP is 0 or when display register X is 0, the program is ready to detect the next key input.

When the program has moved to step F6, the dimension Xd is made 3 so that the entered number will be provided with a symbol showing the dimension of the cubic volume.

### Flowchart of Fig. 9

When the "a/b" key is depressed, it is detected whether or not display register X is 0 (step F1), whether or not display pointer SLP is 0 (step F2), whether or not display pointer YP is 1 (step F3), whether or not display pointer FP is 1 (step F4), whether or not display flag inF is 1 (step F5), and whether or not dimension Xd is less than 2 (step F6).

If register X is 0 at step F1, or pointer SLP is not 0 at step F2, or pointer YP is 1 at step F3, or pointer FP is 1 at step F4, or flag inF is 1 at step F5, the program is ready to detect the next key input.

When the program has moved to step F7, 1 is entered in display pointer SLP.

### Flowchart of Fig. 10

When the ten numerical keys are depressed, it is detected whether or not display flag inF is 1 (step G1), whether or not dimension Xd is less than 2 (step G2), whether or not display pointer SLP is less than 3 (step G3), and whether or not display pointer SLP is 0, or if display pointer YP is not 1 and, at the same time, if display pointer FP is not 1 (step G4).

If said display flag inF is 1 at step G1, the program is ready to detect the next key input. This is to prevent the entering of any numerical key after the inch unit is entered.

If dimension Xd is equal to or greater than 2 at step G2, or if said display pointer SLP is equal to or greater than 3 at step G3, the program is ready to detect the next key input.

At step G4, if pointer SLP is 0, or if pointer YP is not 1 and, at the same time, pointer FP is not 1, the program is ready to detect the next key input. In this manner, rule (d) is programmed.

Next, at step G5, the contents of display register X are shifted to the left to be displayed in the next segment located on the left side.

At the next step G6, the numeral inputted by depressing one of the ten keys is entered at the lowest place in the display register X as a least significant number.

At step G7, it is detected whether or not display pointer YP is 0. If pointer YP is 0, 1 is loaded in the pointer YP (step G8).

At step G9, it is detected whether or not display pointer FP is 0. If pointer FP is 0, 1 is loaded in the pointer FP (step G10).

At step G11, it is detected whether or not display pointer SLP is 0. If pointer SLP is 0, 1 is loaded in the pointer SLP.

The program described above can be summarized in two points as follows.

The first point is the input order of the different units. When the data is inputted in the order of:
first number data, first unit data, second number data, second unit data, third number data and third unit data,
it is necessary that the first unit has the highest level, the second unit has the next highest level and the third unit has the lowest level, and that the first and second numbers should not be a fraction or a decimal. In the above example, it is possible to delete the inputting of the first number data, first unit data, second number data, and second unit data.

It is to be noted that the first number data is inputted by the depression of at least one of the ten numerical keys. The second and third number data are inputted in the same manner. Also, the first, second and third units are inputted, according to the above embodiment, by the depression of the yard key, foot key, and inch key, respectively.

According to the present invention, the units are not restricted to those hereinbefore described, but other units can be used, such as units of meter, centimeter and millimeter for expressing length, or units of kilogram, gram and milligram for expressing weight.

The second point is the input order of the dimension key and the unit key. After the number data is inputted, the dimension key and the unit key must be entered in said order. It should be noted here that the dimension key and the unit key can not be entered in the opposite order. Also, when inputting a value with a unit, specifically an area or a cubic volume, only one unit can be inputted.

Furthermore, when a fraction is entered and, thereafter, a unit is entered, it is impossible to further input any number or any unit.

When numerical values and units are inputted alternately in series to the electronic calculator of the present invention, the second or the third entered unit is lower than the first or the second entered unit, respectively, or otherwise, it is prevented to enter the unit. For example, when values are inputted in yards, feet, and inches, if the value in feet is first inputted, the value in yards can not be inputted thereafter, according to the present invention. Units can not be inputted unless a higher unit precedes a lower unit, so that no error will occur in the order in which units are inputted.

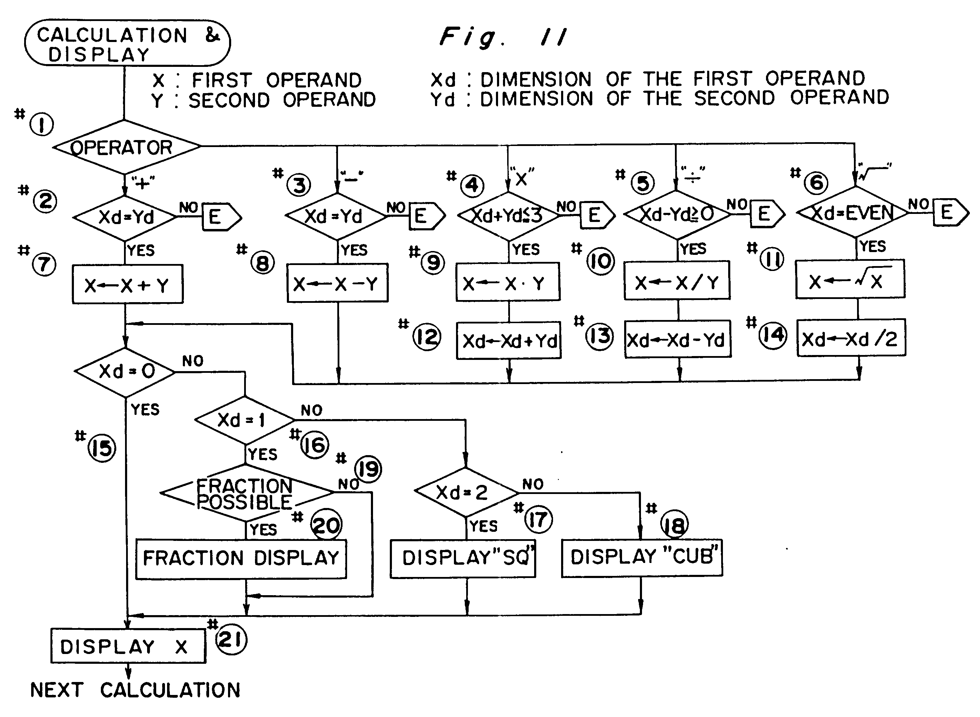

Referring to Fig. 11, a flowchart showing the details of a procedure is illustrated.

Examples are now given with respect to operations for arithmetic calculations, and also an operation for taking a square root.

The first operand is stored in register X and the second operand is stored in register Y. Furthermore, the dimension number of the first operand is stored in register Xd and that of the second operand is stored in register Yd. The dimension number is 0 when the operand refers to a dimensionless number; the dimension number is 1 when the operand refers to a length; the dimension number is 2 when the operand refers to an area; and the dimension number is 3 when the operand refers to a volume.

First, before the operation is carried out, the type of the arithmetic operator is detected (step #1).

The program moves to step #2 when the arithmetic operator is for addition, to step #3 when the arithmetic operator is for subtraction, to step #4 when the arithmetic operator is for multiplication, to step #5 when the arithmetic operator is for division, and to step #6 when the arithmetic operator is for taking a square root.

As described above, the procedures differ according to the type of arithmetic operator, and it is detected, as will be described below, whether or not the dimension of the first operand and that of the second operand are acceptable.

When the detected arithmetic operator is for addition, it is detected whether or not the dimension of the first operand stored in register Xd is identical with the dimension of the second operand stored in register Yd (step #2).

Similarly, when the detected arithmetic operator is for subtraction, it is detected whether or not the dimension is identical between the first and second operands, as carried out in the same manner as described above (step #3).

When the detected arithmetic operator is for multiplication, it is detected whether or not the sum of the dimension number of the first operand stored in said register Xd and that of the second operand stored in said register Yd, represented as (Xd + Yd) is equal to or less than 3. When the sum is equal to 3, the result will represent a cubic volume; when the sum is equal to 2, the result will represent an area; when the sum is equal to 1, the result will represent a length; and when the sum is equal to 0, the result will represent a dimensionless number. When the sum exceeds 3, the result will be meaningless, and the error is shown on the display.

When the detected arithmetic operator is for division, it is detected whether or not the difference between the dimension number of the first operand stored in register Xd and that of the second operand stored in register Yd, represented as (Xd - Yd), is equal to or greater than 0.

When the detected arithmetic operator is for taking the square root, it is detected whether or not the dimension of the first operand stored in said register Xd is equal to an even number.

When the dimension numbers of both the first and second operands have been determined to be acceptable at step #2, #3, #4, #5, or #6, the program moves to the next step #7, #8, #9, #10, or #11, respectively.

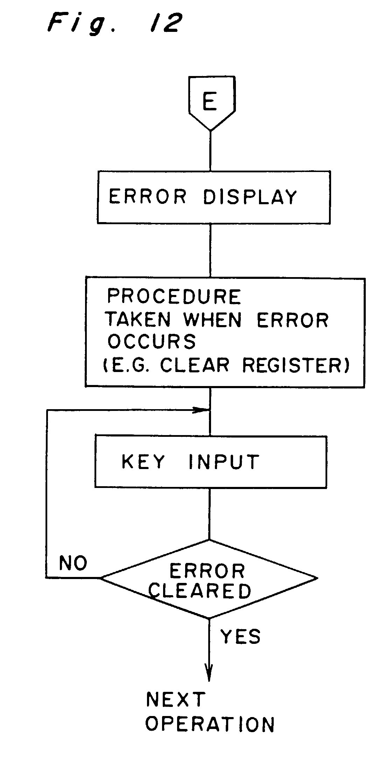

If the dimension number is found to be unacceptable with respect to the first and second operands at any one of steps #2, #3, #4, #5, or #6, the program moves to an error routine, which is shown in Fig. 12.

At step #7, the second operand stored in register Y is added to the first operand stored in register X, and the sum thereof is stored in register X.

At step #8, the second operand stored in register Y is subtracted from the first operand stored in register X, and the difference therebetween is stored in register X.

At step #9, the first operand stored in register X is multiplied by the second operand stored in register Y, and the result of the multiplication, i.e., the product is stored in register X. Next, at step #12, the dimension number of the first operand stored in register Xd is added to that of the second operand stored in register Yd, and the sum thereof is stored in register Xd.

At step #10, the second operand stored in register Y is divided by the first operand stored in register X, and the result of the division, i.e., the quotient is stored in register X. Next, at step #13, the dimension number of the first operand stored in register Xd is subtracted from that of the second operand stored in register Yd, and the difference thereof is stored in register Xd.

At step #11, the square root of the first operand stored in said register X is taken, and the obtained square root is stored in register X. Next, at step #14, the dimension number of the first operand stored in register Xd is divided by 2, and the quotient thereof is stored in register Xd.

As apparent from the above, the operations of multiplication (step #12), division (step #13), and square root (step #14) require calculations (steps #12, #13 and #14) to obtain the dimension number to be used for the result of the arithmetic operation.

The results of the arithmetic operation are displayed in different styles, depending on the dimension number. When the dimension number of the calculated result of the operation stored in register Xd is 0, the display shows only the result of the operation stored in register X (step #21).

When the dimension number of the calculated result of the operation stored in register Xd is not 0, the operation moves to step #16, step #17, or step #18 according to the dimension number.

At step #19, it is detected whether or not a fractional representation is possible on the display, that is, whether or not the part following the decimal point of the result of the operation can be represented as a fraction in the form of ^{x}/2ⁿ. When a fractional representation is possible, the fraction expression is selected so that the result of the operation stored in register X is converted to a fractional representation (step #20). On the contrary, when the fractional representation is not possible, the decimal expression is selected so that the result of the operation stored in register X is shown on the display (step #21) without conversion to the fractional representation.

When the dimension number of the result of the operation is 2, "SQ" will be shown through step #17 for the indication of the square.

When the dimension number of the result of the operation is 3, "CUB" will be shown through step #18 for the indication of the cube.

At step #21, the result of the operation is displayed and, thereafter, the program proceeds to the steps for the next operation.

On the display, the dimensionless numbers and the numbers representing the length can be distinguished such that the latter is shown with a unit, and the former is shown with no unit.

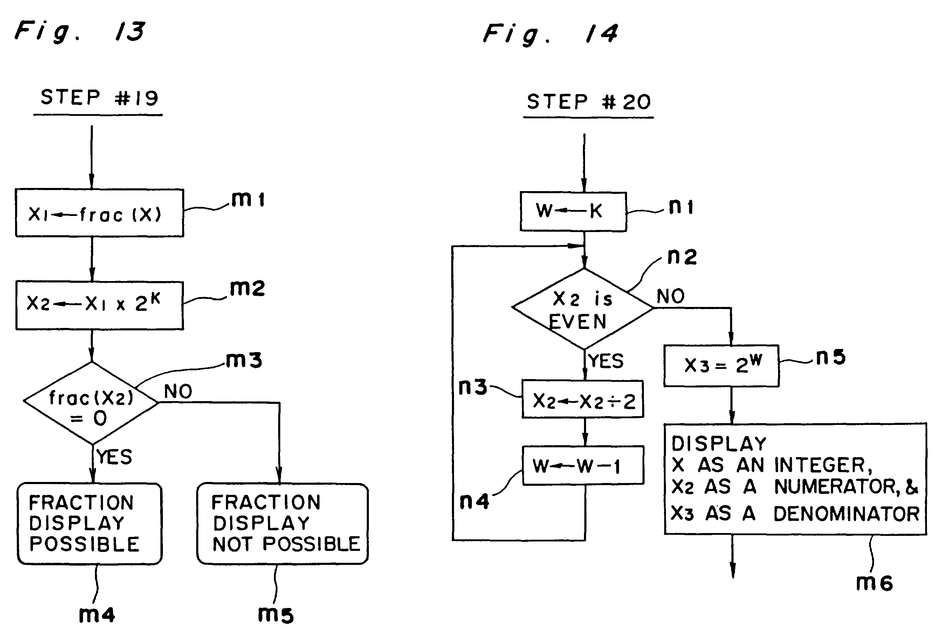

Referring to Fig. 13, there is illustrated the procedure of step #19 in detail. First, the decimal part of the number as stored in register X is read out (step m1). In the drawing at step m1, frac (X) represents the decimal part (the part following the decimal point) of the number stored in register X. The decimal part of the number is stored in register X1. Next, at step m2, the decimal part stored in register X1 is multiplied by 2^{K} and the product is stored in register X2. Here, K represents a predetermined natural number arbitrarily chosen in such a manner as to make the largest possible denominator 2^{K}. In the example herein described, 6 was chosen for K so that the largest possible denominator would be 64 (K=6, 2⁶=64). Next, at step m3, it is examined whether or not the number stored in register X2 contains a decimal part, that is, whether frac (X2) is 0 or not. When frac (X2)=0, a fractional representation is possible (step m4), and when frac (X2) 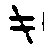 0, a fractional representation is not possible (step m5).

Referring to Fig. 14, there is shown a procedure of step #20 in detail. First, the value of the above-mentioned K is stored in register W (step n1). Next, it is detected whether or not the number stored in register X2 is an even number (step n2). When the number stored in register X2 is an even number, the process moves to step n3, where the number is divided by 2 (the numerator is divided by 2) and the quotient is stored in register X2. Then, the program moves to step n4, where 1 is subtracted from the number stored in register W (step n4). Since the denominator is 2^{W}, the subtraction, W-1 as described above, is substantially equal to dividing the fraction by 2. Then, the program returns to step n2. Again it is detected whether or not the number stored in register X2 is an even number. When the number is detected as not to be an even number, the number in register X2 is no longer reducible by 2. Then, the program moves to step n5 at which the value of the denominator 2^{W} is stored in register X3 (step n5). Then, a fraction is displayed such that the value stored in register X3 is displayed as the denominator; the value stored in register X2 is displayed as the numerator; and the number stored in register X is displayed as the integer (step n6).

An example for displaying the fraction will be given next.

It will be examined whether or not 1.3125 (1$\frac{\text{5}}{\text{16}}$) can be represented as a fraction by the flowchart of Figs. 6 and 7. At step m1, 0.3125 will be stored in register X1. At step m2, when K=6, 0.3125 x 2⁶ = 20 is calculated and the result is stored in register X2.

Since the number stored in register X2 has no decimal part, the number stored in register X can be expressed in the fraction (steps m3 and m5).

Next, since W=K (step n1) and X2 is an even number (step n2)$\text{X2 = X2 ö 2 = 10}$ and$\text{W = W - 1 = 5}$ are carried out at steps n3 and n4.

Therefore, when steps n2, n3 and n4 are repeated, it follows: X2 = 5, and W = 4, to reach a condition that the number in register X2 is no longer an even number. Thus, the program moves to step n5 in which register X3 is stored with 16, as indicated below.${\text{X3 = 2}}^{\text{W}} {\text{= 2}}^{\text{4}} \text{= 16}$ Therefore, X2=5 is obtained as a numerator, and X3=16 is obtained as a denominator, which are used for the fraction display on the screen.

Another example is a case when the given number is 13.83̇ (13$\frac{\text{5}}{\text{6}}$). In this case, X1=0.83̇ and X2=53.3̇, so that it is so detected that the fractional expression using 2^{K} as a denominator is impossible.

## Claims

1. An electronic calculator comprising:
means for inputting and outputting numerical data expressed by the use of a decimal point,
means for inputting and outputting numerical data expressed by the use of a fraction,
means for calculating a fraction from inputted numerical data, and
display means for displaying inputted and calculated numerical data,
**characterized by**
means for multiplying a decimal part of a number by 2ⁿ, in which n is an integer,
means for detecting whether or not the result of the multiplication contains a decimal part, and
means for controlling the display means to show said decimal part of said number in a decimal representation when it is so detected that said multiplication result contains a decimal part, and to show said decimal part of said number in a fraction representation when it is so detected that said multiplication result contains no decimal part.

## Patentansprüche

1. Elektronischer Rechner mit:
einer Einrichtung zum Eingeben und Ausgeben numerischer Daten, die durch die Verwendung eines Dezimalpunkts ausgedrückt sind,
einer Einrichtung zum Eingeben und Ausgeben numerischer Daten, die durch die Verwendung eines Bruchs ausgedrückt sind,
einer Einrichtung zum Berechnen eines Bruchs aus eingegebenen numerischen Daten, und
einer Anzeigeeinrichtung zum Anzeigen eingegebener und berechneter numerischer Daten,
gekennzeichnet durch
eine Einrichtung zum Multiplizieren eines Dezimalbestandteils einer Zahl mit 2ⁿ , wobei n eine ganze Zahl ist,
eine Einrichtung zum Erkennen, ob das Ergebnis der Multiplikation einen Dezimalbestandteil enthält, und
eine Einrichtung zum Steuern der Anzeigeeinrichtung, um den Dezimalbestandteil der Zahl in einer dezimalen Darstellung wiederzugeben, wenn erkannt wurde, daß das Multiplikationsergebnis einen dezimalbestandteil enthält, und um den Dezimalbestandteil der Zahl als Bruchdarstellung anzuzeigen, wenn festgestellt wurde, daß das Multiplikationsergebnis keinen Dezimalbestandteil enthält.

## Revendications

1. Calculatrice électronique comprenant :
- des moyens pour entrer et sortir des données numériques exprimées à l'aide d'un signe décimal,
- des moyens pour entrer et sortir des données numériques exprimées à l'aide d'une fraction,
- des moyens pour calculer une fraction à partir des données numériques entrées, et
- des moyens d'affichage pour afficher les données numériques entrées et calculées,
caractérisée par
- des moyens pour multiplier une part décimale d'un nombre par 2ⁿ, n étant un nombre entier,
- des moyens pour savoir si le résultat de la multiplication contient une part décimale ou pas, et
- des moyens pour commander les moyens d'affichage afin de montrer la part décimale dudit nombre avec une représentation décimale lorsqu'il s'avère que le résultat de la multiplication contient une part décimale, et afin de montrer la part décimale dudit nombre avec une représentation sous forme de fraction lorsqu'il s'avère que le résultat de la multiplication ne contient pas de part décimale.
